# FASCICULE DE BREVET EUROPEEN

(11) **EP 1 687 975 B1**
(45) Date de publication et mention de la délivrance du brevet: **15.05.2013**
(21) Numéro de dépôt: 04805855.6
(22) Date de dépôt: 24.11.2004
(51) Int. Cl.: H04N 21/4405, H04N 21/6405, H04N 21/6408, H04N 21/2347, H04N 21/258, H04N 21/63, H04N 7/167, H04N 7/08

(54) **DIFFUSION SÉCURISÉE ET PERSONNALISÉE DE FLUX AUDIOVISUELS PAR UN SYSTEME HYBRIDE UNICAST/MULTICAST**
SICHERE UND PERSONALISIERTE VERTEILUNG AUDIOVISUELLER FLÜSSE MITTELS EINES HYBRIDEN UNICAST-/MULTICAST-SYSTEMS
SECURE AND PERSONALISED DISTRIBUTION OF AUDIOVISUAL FLOWS BY MEANS OF A HYBRID UNICAST/MULTICAST SYSTEM

(30) Priorité: 24.11.2003 FR 0350895
(43) Date de publication de la demande: 09.08.2006
(73) Titulaire: NAGRA FRANCE SAS, 75015 Paris (FR)
(72) Inventeur: LECOMTE, Daniel, F-75116 Paris (FR); HOSNY, Reda, F-75012 Paris (FR); LAMTOUNI, Mohammed, 92160 ANTONY (FR)
(74) Mandataire: Leman Consulting S.A.
(86) Numéro de dépôt international: PCT/FR2004/050613
(87) Numéro de publication internationale: WO 2005/053299

(56) Documents cités:
- EP-A- 1 093 249
- EP-A2- 0 909 069
- WO-A-01/67667
- WO-A-02/45334
- WO-A-02/062054
- WO-A-03/063445
- US-A1- 2002 141 391
- US-B1- 6 466 550
- US-B1- 6 539 022

## Description

La présente invention se rapporte au domaine de la diffusion de séquences audiovisuelles numériques.

On se propose dans la présente invention de fournir un procédé et un système permettant de protéger visuellement et/ou auditivement une séquence audiovisuelle issue d'un standard numérique, d'une norme numérique ou d'un standard propriétaire, de la distribuer de manière sécurisée en mode « multicast » à travers un réseau de télécommunication et de reconstituer son contenu original sur un module de recomposition de l'équipement destinataire à partir d'un flux audiovisuel numérique protégé.

La présente invention se rapporte plus particulièrement à un dispositif capable de transmettre de façon sécurisée à travers un réseau de télécommunication un ensemble de flux audiovisuels de haute qualité vers un écran de visualisation et/ou vers une sortie audio appartenant à un terminal ou dispositif d'affichage, tel qu'un écran de télévision, un ordinateur ou un terminal mobile de type téléphone ou PDA (Personal Digital Assistant), ou autre, tout en préservant la qualité audiovisuelle mais en évitant toute utilisation frauduleuse comme la possibilité de faire des copies pirates des contenus diffusés. L'invention se réfère essentiellement à un procédé et un système client-serveur qui protège les contenus audiovisuels en les séparant en deux parties, la deuxième partie étant absolument indispensable pour la reconstitution du flux original, ce dernier étant restitué en fonction de la recombinaison de la première partie avec la deuxième partie

Le procédé utilisé pour la description d'un exemple préféré de réalisation dans la présente invention sépare le flux audiovisuel en deux parties, de manière à ce que la première partie appelée « flux principal modifié » contienne la quasi-totalité de l'information initiale, par exemple plus de 99%, et une deuxième partie appelée « information complémentaire » contenant des éléments ciblés de l'information initiale, qui est de très petite taille par rapport à la première partie. L'information complémentaire contient des données extraites du flux original, lesdites données extraites étant remplacées par des « leurres » dans ledit flux principal modifié, de manière à provoquer une forte dégradation audiovisuelle, tout en gardant ledit flux principal protégé conforme à la norme ou au standard du flux original.

Actuellement, il est possible de transmettre des flux audiovisuels sous forme numérique via des réseaux de diffusion de type hertzien, câble, satellite, etc. ou via des réseaux de télécommunication type DSL (Digital Subscriber Line) ou BLR (Boucle Locale Radio) ou via des réseaux DAB (Digital Audio Broadcasting), ainsi que via tout réseau de télécommunication sans fil de type GSM (Global System for Mobile), GPRS (General Packet Radio Service), UMTS (Universal Mobile Télécommunication System), Bluetooth, Wifi, etc. Par ailleurs, pour éviter le piratage des oeuvres audiovisuelles ainsi diffusées, ces dernières sont souvent cryptées ou brouillées par divers moyens bien connus par l'homme de l'art.

L'art antérieur connaît le document U.S. 6295361 présentant une méthode et un dispositif permettant à un noeud de gestion de clés à décider du processus de changement de la clé de groupe de certains noeuds au sein d'un groupe multicast, à l'aide d'un indicateur inséré dans un paquet multicast. Le noeud gestionnaire décide comment insérer l'indicateur et quels sont les noeuds concernés. La nouvelle clé est alors envoyée et lorsque tous les noeuds du groupe ont reçu leur clé, le noeud gestionnaire envoie un indicateur, ou bien une date à partir desquels tous les membres du groupe sont autorisés à utiliser les nouvelles clés. Cet art antérieur représente une méthode de gestion de la session multicast à l'aide de changement dynamique de clés de groupe, la même clé étant attribuée à tous les membres du même groupe, à l'aide de laquelle les données seront décryptées. Toutefois, la protection utilisée est le cryptage et toutes les données initialement présentes dans le flux audiovisuel restent à l'intérieur du flux protégé. Par conséquent, cet art antérieur ne résout pas le problème de haute sécurisation et personnalisation, objet de la présente invention.

L'art antérieur fait également référence au document W0 02/11356 A2 qui présente une méthode pour la gestion de clés entre le client et le serveur dans un environnement multicast. La méthode est basée sur l'établissement d'un canal sécurisé entre le serveur et le client en utilisant un protocole SSL (Secure Socket Layer) ou TLS (Transport Layer Security) avec certaines modifications de l'ordre d'échange de messages, afin de pouvoir générer une clé de gestion et d'envoyer cette clé au client à travers ledit canal sécurisé, à partir de cette clé, le client génère la future clé de session avec le serveur. Les clients d'un même groupe multicast utilisent la même clé de gestion pour générer une clé de session pendant la session de communication. Cet art antérieur ne correspond pas aux critères de transport sécurisé de données audiovisuelles, objet de la présente invention, les données, même cryptées, étant intégralement présentes dans le flux de données protégé.

À la différence de l'art antérieur, la présente invention propose un système se caractérisant par la diffusion en multicast de l'information complémentaire, un traitement est effectué en temps réel sur des segments représentant des entités indépendantes de point de vue traitement, lesdits segments comportant des données pour la reconstruction de l'information audiovisuelle complète, lesdits segments étant sécurisés et personnalisés pour chaque utilisateur, et envoyés aux équipements destinataires en temps réel via un réseau de faible bande passante, à partir d'un serveur central jouant le rôle de contrôleur d'accès pour la visualisation des contenus.

Dans la présente invention, on entend par le terme « multicast » un mode de transmission à partir d'un émetteur vers tous les récepteurs qui appartiennent au même groupe d'abonnés, à la différence du terme « unicast » qui représente un mode de transmission à partir d'un émetteur vers un seul récepteur.

La protection appliquée aux contenus distribués par le système multicast sécurisé, objet de la présente invention, est basée sur le principe de suppression et de remplacement de certaines informations présentes dans le signal audiovisuel originel encodé, par une méthode quelconque, soit : substitution, modification, permutation ou déplacement de l'information. La solution consiste à extraire et à conserver en permanence dans un serveur sécurisé ladite information complémentaire, contenant une partie du flux audiovisuel originel, cette partie étant indispensable pour reconstituer ledit programme audiovisuel, mais étant d'un volume très faible par rapport au volume total du programme audiovisuel enregistré chez l'usager ou reçu en temps réel par cet usager. Ladite information complémentaire est transmise en mode multicast via le réseau sécurisé de transmission au moment de la visualisation et/ou de l'audition dudit programme audiovisuel.

Le fait d'avoir enlevé et substitué par des leurres une partie des données originales du flux audiovisuel initial lors de la génération du flux principal modifié, ne permet pas la restitution dudit flux d'origine à partir dudit flux principal modifié, qui est entièrement compatible avec le format du flux d'origine, et peut donc être copié et lu par un lecteur classique. Ledit flux principal modifié est toutefois complètement incohérent de point de vue perception audiovisuelle humaine.

Le flux numérique originel étant séparé en deux parties, la plus grande partie du flux audiovisuel, ledit flux principal modifié, sera donc transmise via un réseau de diffusion classique, alors que la partie manquante, ladite information complémentaire, sera envoyée à la demande via un réseau de télécommunication bande étroite, ou encore via un support physique comme une carte à mémoire, un disque, etc. Toutefois, les deux réseaux peuvent être confondus, tout en gardant les deux voies de transmission séparées. Pour la reconstitution du flux original, l'information complémentaire est envoyée pièce par pièce pendant la visualisation et/ou l'audition du flux audiovisuel.

L'objet de la présente invention est la transmission sécurisée et personnalisée, après authentification de l'utilisateur, de l'information complémentaire en mode multicast, de manière à éviter à ce qu'elle puisse être copiée ou tomber intégralement en possession de l'utilisateur ou de toute personne mal intentionnée.

La distribution en multicast est utilisée dans les cas où un grand nombre d'utilisateurs veut accéder au même contenu et en même temps, ce qui est par exemple le cas de la diffusion en direct via satellite ou sur le câble ou sur tout autre réseau permettant d'atteindre plusieurs abonnés en même temps. Le flux de contenu est transmis à partir d'un serveur vers les clients via un canal multicast. Par une voie séparée, l'information complémentaire désignée et personnalisée pour chaque client actif (membre du groupe multicast) est diffusée à partir d'un serveur sécurisé également en multicast. L'utilisateur qui est intéressé par un contenu, rejoint le groupe multicast, reçoit l'information complémentaire en fonction de ses droits permettant ainsi la reconstitution du flux original et donc la visualisation simultanément à la réception de ladite information complémentaire.

D'un côté, le bénéfice de la distribution en mode multicast de l'information complémentaire est qu'un serveur centralisé peut modeler sa distribution vers un très grand nombre de consommateurs. D'un autre côté, l'inconvénient de la distribution en multicast est que la même information complémentaire est transmise vers tous les utilisateurs du groupe et par conséquent, il est plus difficile de contrôler individuellement les différents consommateurs.

De point de vue sécurité et protection de contenus, le multicast présente les désavantages des modèles "un-vers-plusieurs" ou « un seul émetteur, plusieurs récepteurs » de l'expression en anglais « one-to-many » qui désigne une opération de communication émanant d'un seul émetteur et s'adressant à de multiples récepteurs. D'où la nécessité d'élaborer un système de protection pour la distribution multicast fiable et se basant sur les caractéristiques suivantes :
- La solution de la présente invention est complémentaire au protocole de distribution en multicast « rejoindre/quitter le groupe » bien connu par l'homme de l'art ;
- La prise de décision pour rejoindre/quitter le groupe est effectuée au niveau des éléments d'accès du réseau pour le contrôle d'accès à partir d'une liste préalablement établie, où le client reçoit la permission de rejoindre ce groupe, mais sans avoir le droit à cette étape, de visualiser le flux diffusé pour ce groupe, lesdits éléments d'accès étant appelés des commutateurs ;

- Les utilisateurs auxquels un commutateur a refusé l'autorisation ne peuvent pas rejoindre le groupe ;
- Le serveur central est responsable de la mise à jour de la liste des clients et de la prise de décision pour inclure de nouvelles identités sur la liste des clés de cryptage pour la session, après une première étape d'authentification avec le client voulant rejoindre le groupe;
- Chaque clé de session est individuelle à chaque client et possède sa propre durée de vie, après laquelle elle est considérée comme une clé non valide, elle est alors détruite par le serveur ;
- L'échelle d'un groupe multicast est de l'ordre de plusieurs milliers d'utilisateurs par groupe;
- La relation est du type un-vers-tous dans une seule direction, par conséquent le serveur est toujours la source d'émission et les clients toujours les récepteurs, à l'exception des requêtes émises depuis les récepteurs vers le serveur par un lien de retour en unicast, ou par exemple pendant l'étape de l'authentification.

La particularité de la présente invention est que le serveur diffuse en multicast vers un grand nombre d'utilisateurs pouvant rejoindre et quitter le groupe de manière dynamique. De plus, dans la présente invention, 1 supprime la fonctionnalité de relation sélective ("push relation" en anglais), c'est-à-dire que les clients d'un même groupe ne peuvent pas communiquer entre eux et par conséquent le modèle de connexion multicast est simplifié, tout comme le protocole de gestion et de distribution de clés pour les membres du groupe.

L'objet de la présente invention est un protocole simplifié pour la diffusion sécurisée de l'information complémentaire en multicast, complétant ainsi,les protocoles multicast de diffusion existants avec un protocole de diffusion sécurisée de ladite information complémentaire.

On connaît, dans l'état de la technique, le document WO-A-03/063445 qui enseigne un procédé selon le préambule de la revendication 1.

Par rapport à ce document, le problème résolu par l'invention est d'optimiser la bande passante du réseau de transmission pour la transmission d'un flux audiovisuel à une pluralité d'utilisateurs.

Ce problème est résolu par un procédé selon la revendication 1.

Des modes de réalisation de l'invention sont décrits dans les revendications dépendantes.

De préférence, l'authentification entre le client et le serveur s'effectue en mode unicast.

Selon un mode de mise en oeuvre particulier, une clé de session unique par contenu et par client est générée par le serveur central suite à ladite authentification.

Avantageusement, l'information complémentaire est compressée et cryptée avant l'envoi au client.

Selon une variante, la gestion d'un groupe de multicast s'effectue dans la couche de liaison contrôlant la distribution des données en multicast, uniquement pour le point d'accès concerné.

De préférence, la gestion et la sécurisation de l'information complémentaire, est effectuée suite à une multi-réception de demandes d'authentification par un serveur central, et comprend une étape de compression, une étape de cryptage et une étape de gestion desdites clés de session.

Selon un mode de réalisation préférentiel, la régénération d'une nouvelle clé de session pour le client est effectuée en fonction de la décision du client de prolonger la connexion, est basée sur la durée de vie de la précédente clé de session, et est individuelle pour chaque membre du groupe multicast.

Selon un autre mode de réalisation, l'information complémentaire est sécurisée et personnalisée pour chaque client et pour chaque session multicast à l'aide de méthodes de cryptage hybrides ou symétriques ou asymétriques.

L'invention concerne également un système pour la distribution sécurisée de flux audiovisuels caractérisé en ce que le contrôle de débit dans le groupe multicast est effectué suite à la gestion et à la personnalisation de la sécurisation de l'information complémentaire.

De préférence, le système selon l'invention comporte un dispositif de séparation du flux vidéo original en un flux principal modifié et en une information complémentaire, au moins un serveur multimédia contenant les flux audiovisuels protégés, au moins un serveur central sécurisé comprenant un dispositif de sécurisation et de personnalisation de ladite information complémentaire, à partir duquel est distribuée l'information complémentaire, au moins un réseau de télécommunication, au moins un routeur, au moins un commutateur servant de point d'accès pour la connexion avec l'équipement destinataire et un dispositif sur l'équipement destinataire pour la reconstruction du flux audiovisuel original en fonction dudit flux principal modifié et de ladite information complémentaire.

La présente invention sera mieux comprise à l'aide des exemples de réalisation et des étapes détaillées suivants.

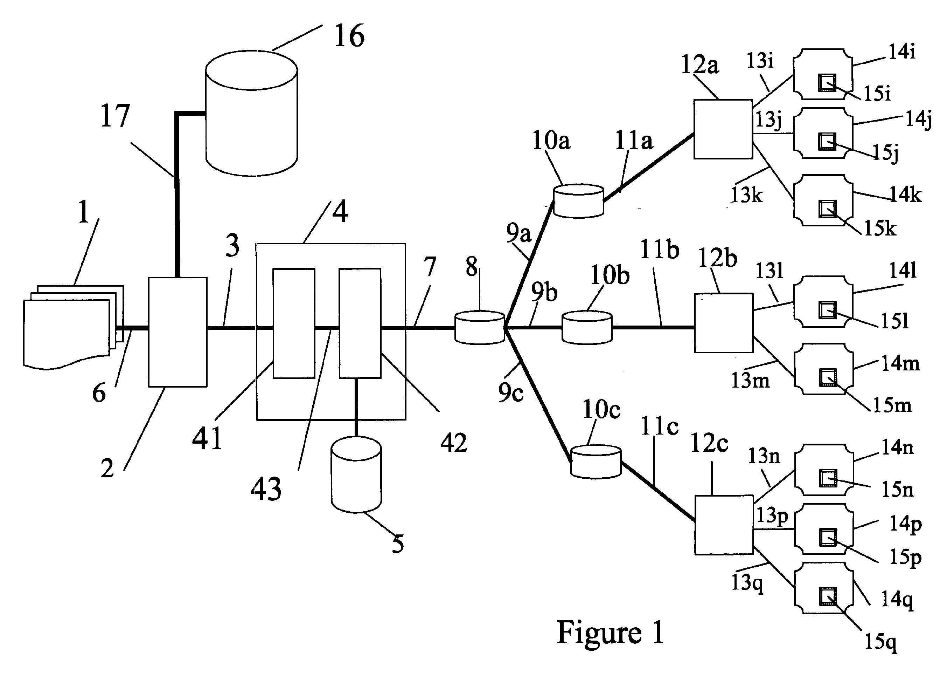

Un exemple de réalisation préféré, mais non limitatif, du procédé qui répond aux critères de sécurité et de fiabilité est illustré grâce au système client - serveur présenté sur la figure.

Le flux audiovisuel sous forme numérique (1), transmis via le lien (6) au module d'analyse et d'embrouillage (2), est séparé en deux parties par ce module (2). Le flux principal modifié (17) est stocké dans un serveur multimédia (16) et est envoyé en temps réel au client pendant la visualisation via un réseau large bande ou bien est stocké au préalable sur le dispositif de sauvegarde du terminal (14) de l'utilisateur. L'information complémentaire (3) est envoyée dans le module de stockage et de segmentation (41) du serveur central sécurisé (4).

L'information complémentaire étant envoyée uniquement à la demande, sa distribution en temps réel, sa sécurisation et sa personnalisation pour chaque utilisateur est réalisée grâce à la propriété de « scalabilité en débit » sur les réseaux de transport. On définit la notion de « scalabilité en débit » comme la capacité d'un réseau de gérer, de modifier, de répartir et d'adapter le débit des flux qui transitent en fonction de la bande passante disponible ou négociée et en fonction des congestions du réseau. Grâce au faible débit de l'information complémentaire transmise en temps réel, le procédé de la présente invention contient une étape de segmentation de l'information complémentaire dans le module (41), qui génère des segments de données de taille variable, chaque segment correspondant à un élément audiovisuel entier subjectivement cohérent, tel qu'une image ou une trame, un groupe d'images ou GOP (« Group Of Pictures » en anglais) dans un flux MPEG-2 par exemple. Dans une variante, la segmentation est effectuée en une seule étape après la génération de ladite information complémentaire (3) et produit une série de segments désignés comme « flux d'information complémentaire » qui restent stockés dans le module de stockage et segmentation (41). Dans une autre variante, le flux d'information complémentaire est généré en temps réel.

L'étape de segmentation de l'information complémentaire est suivie par une étape d'encapsulation en blocs de données et une étape de cryptage dans le module (42), précédés par une étape de compression de leur taille, où les blocs restent disponibles à la demande de la part des utilisateurs. Le flux d'information complémentaire est envoyé vers le terminal (14) de l'utilisateur en continu sous forme de blocs, un bloc contenant un segment auquel ont été rajoutées des informations d'accès ou «entête» comportant des données relatives à l'identité de l'utilisateur, dans le cas d'un réseau classique centralisé. De préférence, l'entête comporte des données relatives à la mobilité de l'utilisateur (position, droits, points d'accès réseau par exemple) dans le cas d'un réseau réparti. Avantageusement, l'entête comporte des données relatives aux clés de cryptage du flux d'information complémentaire. Un bloc est l'unité fondamentale de communication, il est appelé aussi UFIC (Unité de Flux d'Information Complémentaire).

Lorsque l'utilisateur « i » souhaite visionner une séquence, il se connecte via son équipement (14i) et le lien (13i) à son point d'accès le plus proche, le commutateur (12a), qui lui a donné au préalable l'autorisation de rejoindre le groupe multicast. Le commutateur (12a) redirige la requête via le lien (11a) vers un routeur local (10a), ce dernier adresse à son tour la demande via le lien (9a) vers un routeur central (8), ledit routeur central (8) s'adresse au serveur central (4) via le lien (7). Lorsque le serveur (4) reçoit ainsi la requête du client (14i), le serveur central (4) exige une authentification de la part de ce client (14i) afin de décider l'envoi des UFICs sollicitées, qui sont uniques par titre de séquence audiovisuelle. Après le dialogue d'authentification, l'identification du client (14i) par le serveur central (4) comme figurant dans sa base de données (5) et la génération d'une clé de session unique, le flux segmenté dans le module (41) est envoyé via le lien (43) au module (42), compressé et crypté dans ce module (42) par ladite clé de session unique par titre et par client. Les UFICs sont ensuite transportées via la liaison (7), le routeur central (8), le lien (9a), le routeur local (10a), le lien (11a), le commutateur (12a) et le lien (13i) vers le terminal (14i) de l'utilisateur (i). Avantageusement, le terminal (14i) de l'utilisateur est équipé d'une carte à puce (15i), sur laquelle s'effectue le décryptage des unités du flux d'information complémentaire.

Le commutateur (12a) est le responsable de la sécurité, il contrôle les adresses des clients dans la liste d'accès composée d'informations relatives aux sessions précédentes avec le client (par exemple, temps et durée de connexion, paiement anticipé ou retardé, type de contenus visualisés), cela assure la personnalisation de chaque session client donc de l'information complémentaire en formant des unités UFICs. Un mode de mise en oeuvre est l'utilisation d'une méthode hybride, comme par exemple utiliser l'unicast pour l'authentification à l'aide de clés sécurisées et le multicast pour la diffusion de l'information complémentaire.

En premier lieu, si le client (14i) réussi à rejoindre le groupe multicast souhaité via le commutateur (12a), c'est qu'il possède une identité reconnue et une autorisation de la part du réseau pour recevoir lesdits paquets d'information complémentaire après l'étape d'authentification; toutefois, tant qu'une clé de session valide n'a pas été générée par le serveur central, le client ne peut pas utiliser les UFICs, lesdites UFICs étant diffusées et cryptées uniquement avec les clés des autres utilisateurs (14j, 14k, etc.).

En second lieu, le client dialogue avec le serveur d'information complémentaire (4) dans une liaison point-à-point en unicast, la phase d'authentification est ainsi effectuée pour s'assurer que le client possède suffisamment de droits pour recevoir des UFICs et pour générer la clé de session (à travers une méthode d'échange d'informations sécurisée), les droits de visualisation étant sauvegardés dans une base de données de gestion des droits (5).

A la fin de cette étape, le serveur (4) rajoute automatiquement la nouvelle clé du client (14i) dans la liste de clés de session correspondant au groupe multicast sollicité.

Le serveur (4) commence à crypter l'UFIC courant avec la clé de session et envoie l'UFIC avec ce qui est appelée une étiquette qui est délivrée au client pendant l'étape d'authentification. Ladite étiquette contient l'information sur une association unique entre l'UFIC cryptée et chaque client. Le client (14i) reçoit des groupes de paquets, tant qu'il détient ladite étiquette valide et décrypte les portions de données avec ladite clé de session, jusqu'à ce que la durée de vie de ladite clé de session expire.

Après une période suffisamment longue pour avoir le droit demander une nouvelle clé et dans le cas où le client qui souhaiterait continuer à recevoir l'information complémentaire du même groupe multicast, recommence une nouvelle étape d'authentification.

Avantageusement, le serveur (4) crypte les UFICs correspondantes à une diffusion simultanée du même contenu avec les clés de session de tous les clients autorisés 14i, 14j, 14k,....,14q et envoie un certain nombre de fois la même UFIC cryptée avec chaque clé différente, correspondant au nombre de clients connectés.

De préférence, avant le cryptage avec toutes les clés de session, est appliquée une compression des unités de flux d'information complémentaire, réduisant le volume d'information à transporter et augmentant aussi la sécurisation des UFICs cryptées par la suite, en réduisant la redondance, car beaucoup d'analyses cryptographiques exploitent la redondance afin de casser la protection. L'efficacité de l'algorithme de compression est aussi un des facteurs qui gère la scalabilité en débit du groupe multicast en fonction du nombre des membres par groupe.

Chaque utilisateur décrypte les UFICs reçues à l'aide de sa propre clé de session.

On entend par "cycle de transmission du serveur" l'étape d'envoi d'une UFIC sous forme compressée, cryptée avec toutes les clés des membres du groupe vers l'adresse et le numéro de port du groupe multicast.

Un avantage de cette technique est qu'elle assure une résistance au piratage due au fait qu'on applique un cryptage multiple du même contenu avec différentes clés pour les différents équipements destinataires. Le mécanisme de compression est appliqué pour le cycle de transmission du serveur afin d'éviter un trafic trop élevé pour les groupes ayant un nombre important de membres (plusieurs milliers d'utilisateurs). Ce modèle est apte à utiliser n'importe quel algorithme de compression sans perte de type LZ (Lempel-Ziv), par exemple LZW (une variante de LZ par Terry Welch's), LZJH (Lempel-Ziv-Jeff-Heath ou v.44 par ITU-T).

Des renouvellements périodiques des clés de session sont effectués, afin d'assurer leur sécurité cryptographique. Par exemple une clé de session peut être valable pour une durée de deux heures, durant laquelle la clé va déchiffrer une quantité d'UFICs ayant un débit d'une dizaine de Kbits/s, égale par exemple à 2²⁰ blocks de données chacun long de 64 bits.

Une extension sur la fonction d'observation des messages du groupe multicast (« snooping » en anglais) du protocole IGMP (Internet Group Management Protocol) sur le dernier point de distribution (12) est utilisée dans la couche liaison pour la gestion d'accès (autoriser ou interdire) pour chaque client sur les flux auxquels ledit client possède ou non les droits et en conséquence optimise la bande passante pour chaque client en son point d'accès, comme par exemple un DSLAM (Digital Subscriber Line Access Multiplixer) d'un réseau DSL (Digital Subscriber Line). Ladite extension sur la fonction d'observation apporte ainsi un mode de transmission multicast étendu et sécurisé. Pendant la phase de distribution ladite information complémentaire est ainsi transmise en mode de transmission multicast étendu et sécurisé vers ledit équipement destinataire depuis un serveur central sécurisé en passant par au moins un routeur et au moins un commutateur reliant ledit équipement destinataire audit serveur central via au moins un point d'accès. Le système garde la personnalisation des UFICs pour chaque client, tout en réduisant le nombre de connections unicast par serveur, à l'exception des moments d'authentification. Le système optimise également le débit donc la quantité de données à transmettre en fonction de la variation du nombre de clients par groupe. Ainsi, la gestion d'accès et la personnalisation de l'information complémentaire (UFIC) contrôlent le débit dans le groupe multicast. La version actuelle du protocole IGMP permet aux commutateurs (12) de détecter les messages IGMP des clients membres, d'envoyer la réponse respective et de contrôler la distribution des paquets en multicast jusqu'au port du client. Dans la présente invention, cette fonction est complétée par un filtrage relatif au premier niveau de contrôle avec une liste d'adresses de la couche liaison MAC (Medium Access Control), lesdites adresses représentant les clients autorisés à se connecter au groupe multicast.

De plus, un marquage avec une étiquette est rajouté pour chaque paquet de données compressé et crypté, qui représente l'identité du client et aussi un second niveau de contrôle et de personnalisation.

Cette identité est utilisée par le commutateur (12) pour déterminer le port physique vers lequel les paquets sont distribués, en envoyant au client donné, uniquement les paquets marqués avec sa propre étiquette.

Selon une variante, les UFICs sont cryptées à l'aide d'algorithmes de cryptage symétriques et la clé de cryptage est ensuite cryptée avec une clé publique du destinataire. C'est un mode d'authentification hybride.

Selon une autre variante, les UFICS sont cryptées à l'aide d'algorithmes de cryptage asymétriques et c'est un mode d'authentification PKI (« Public Key Infrastructure » en anglais).

La présente invention sera illustrée à l'aide d'un deuxième exemple de réalisation préféré, qui inclut un protocole multicast, une méthode d'authentification mutuelle et une méthode de compression pour le serveur comprenant des protocoles de multicast utilisés et leur extension pour la distribution de l'information complémentaire, objet de la présente invention.

Le système de transmission multicast est basé sur un protocole de gestion de groupe (IGMP) qui est responsable du contrôle pour rejoindre/quitter le groupe multicast. Ce protocole est exécuté entre le client (14i,14j,14k) et son point d'accès réseau respectivement le plus proche, le commutateur (12a). Un protocole de routage multicast contrôle le routage du trafic multicast depuis les commutateurs (12) vers tous les routeurs (10) du réseau de distribution.

Un processeur de contrôle situé à l'intérieur du commutateur (12) observe les messages IGMP envoyés par les clients (14). Les commutateurs capables de gérer et d'émuler des messages IGMP utilisent également cette information pour configurer dynamiquement leurs propres filtres d'observation.

Cette solution optimise la gestion de la bande passante au niveau des commutateurs, en évitant la surcharge des LAN (« Local Area Network » en anglais), surtout dans des cas où l'utilisateur final commute fréquemment d'un groupe de multicast à un autre, par exemple lors d'un changement de chaîne de télévision

Les routeurs (10) en support de routage multicast et les commutateurs (12), pour lesquels la couche 3 du modèle OSI est capable de gérer les données, utilisés pour cet exemple, contiennent un contrôle de bande passante avec une fonctionnalité de limitation du débit en IP multicast qui permet d'imposer une limite supérieure pour le trafic effectué depuis le serveur vers les groupes multicast. Le mécanisme de définition des limites inclut la définition d'un filtre de source multicast et d'un filtre récepteur de groupe multicast par port de réception. Ce filtre de contrôle est basé sur l'adresse IP ou également sur l'adresse MAC (Adresse de la carte réseau « Medium Access Control »), en utilisant par exemple le mécanisme MVR (Multicast VLAN Registration) et par conséquent pour éviter une attribution frauduleuse (« spoofing » en anglais) de l'adresse réseau IP du client, un protocole complémentaire est appliqué en unicast « Unicast Reverse Path Forwarding » (URPF) entre le client (14) et le commutateur (12).

## Revendications

1. Procédé pour la distribution sécurisée de flux audiovisuels numériques selon un format standard, normalisé ou propriétaire vers une pluralité d'équipements destinataires, lesdits flux sur lesquels on procède, avant la transmission à l'équipement destinataire, à une séparation du flux en deux parties pour générer un flux principal modifié, présentant le format du flux original, et une information complémentaire d'un format quelconque, comportant les informations numériques aptes à permettre la reconstruction du flux original, dans lequel on transmet par voies séparées le flux principal modifié et l'information complémentaire, dans lequel, pendant la phase de distribution ledit flux principal modifié est transmis à partir d'un serveur de distribution, **caractérisé en ce que** l'on applique une étape de transmission de ladite information complémentaire, pendant la phase de distribution, en mode de groupe multicast vers la pluralité d'équipements destinataire depuis un serveur central sécurisé en passant par au moins un routeur et au moins un commutateur reliant lesdits équipements destinataire audit serveur central via au moins un point d'accès, ladite étape de transmission comprenant une étape de segmentation générant des segments de données de taille variable et une étape de compression de ladite information complémentaire et **en ce que** la gestion d'un groupe de multicast s'effectue dans la couche de liaison sécurisant l'accès à la distribution des données en multicast, uniquement pour le point d'accès concerné.

2. Procédé pour la distribution sécurisée de flux audiovisuels selon la revendication 1, **caractérisé en ce que** l'authentification entre le client et le serveur s'effectue en mode unicast

3. Procédé pour la distribution sécurisée de flux audiovisuels selon la revendication 2, **caractérisé en ce que** suite à ladite authentification, une clé de session unique par contenu et par client est générée par le serveur central

4. Procédé audiovisuels selon pour la distribution sécurisée de la revendication 3, caractérisé en ce flux que l'information complémentaire est compressée et cryptée avant l'envoi au client

5. Procédé pour la distribution sécurisée de flux audiovisuels selon la revendication 3, **caractérisé en ce que** la transmission de l'information complémentaire est effectuée au groupe de multicast et comprend une étape de compression, une étape de cryptage et une étape de gestion desdites clés de session, l'équipement destinataire envoyant une demande d'authentification audit serveur central pour rejoindre le groupe multicast.

6. Procédé pour la distribution sécurisée de flux audiovisuels selon l'une des revendications précédentes, **caractérisé en ce que** la régénération d'une nouvelle clé de session pour le client est effectuée en fonction de la décision du client de prolonger la connexion, est basée sur la durée de vie de la précédente clé de session, et est individuelle pour chaque membre du groupe multicast

7. Procédé pour la distribution sécurisée de flux audiovisuels selon l'une des revendications précédentes, **caractérisé en ce que** la transmission de l'information complémentaire est sécurisée pour chaque client et pour chaque session multicast à l'aide de méthodes de cryptage hybrides ou symétriques ou asymétriques

## Patentansprüche

1. Verfahren zur gesicherten Übertragung audiovisueller digitaler Ströme nach einem Standardformat, standardisierten oder proprietären Format an eine Vielzahl von Empfängereinrichtungen, wobei man vor der Übertragung an die Empfängereinrichtung jeden Stromes in zwei Teile teilt, um einen veränderten Hauptstrom zu erzeugen, mit dem Format des ursprünglichen Stroms, und eine Zusatzinformation in einem beliebigen Format, mit den digitalen Informationen, die geeignet sind, die Rekonstruktion des ursprünglichen Stromes zu gestatten, wobei man auf getrennten Wegen den veränderten Hauptstrom und die Zusatzinformation überträgt, wobei während der Verteilungsphase besagter veränderter Hauptstrom von einem Verteilserver aus übertragen wird, **gekennzeichnet dadurch dass** man während der Verteilungsphase eine Phase der Übertragung besagter Zusatzinformation im Multicastgruppenmodus an die Vielzahl von Empfängereinrichtungen von einem gesicherten zentralen Server aus durchführt, über mindestens einen Router und mindestens einen Schalter, der besagte Empfängereinrichtungen über mindestens einen Zugangspunkt mit dem genannten zentralen Server verbindet, wobei die Übertragungsphase eine Segmentierungsphase umfasst, die Datensegmente unterschiedlicher Größe erzeugt, und eine Phase der Kompression besagter Zusatzinformation, sowie dadurch, dass die Verwaltung einer Multicastgruppe in der Verbindungsschicht ausgeführt wird, die den Zugang zur Verteilung der Daten im Multicast-Modus sichert, nur für den betroffenen Zugangspunkt.

2. Verfahren zur gesicherten Übertragung audiovisueller Ströme nach Anspruch 1 , **gekennzeichnet dadurch dass** die Authentifizierung zwischen Kunde und Server im Unicastmodus erfolgt

3. Verfahren zur gesicherten Übertragung audiovisueller Ströme nach Anspruch 2, **gekennzeichnet dadurch, dass** nach besagter Authentifizierung ein einziger Sitzungsschlüssel pro Inhalt und pro Kunde vom zentralen Server erzeugt wird.

4. Verfahren zur gesicherten Übertragung audiovisueller Ströme nach Anspruch 3, **gekennzeichnet dadurch, dass** die Zusatzinformation vor der Übersendung an den Kunden komprimiert und verschlüsselt wird.

5. Verfahren zur gesicherten Übertragung audiovisueller Ströme nach Anspruch 3, **gekennzeichnet dadurch, dass** die Übertragung der komplementären Information an die Multicastgruppe durchgeführt wird und eine Kompressionsphase umfasst, eine Verschlüsselungsphase und eine Verwaltungsphase der besagten Sitzungsschlüssel, wobei die Empfängereinrichtung eine Authentifizierungsanfrage an den zentralen Server sendet, um sich an die Multicastgruppe

6. Verfahren zur gesicherten Übertragung audiovisueller Ströme nach einem der vorhergehenden Ansprüche, **gekennzeichnet dadurch, dass** die Regeneration eines neuen Sitzungsschlüssel für den Kunden je nach der Entscheidung des Kunden durchgeführt wird, die Verbindung zu verlängern, dass sie auf der Lebensdauer des vorherigen Sitzungsschlüssels basiert, und dass sie individuell für jedes Mitglied der Multicastgruppe ist.

7. Verfahren zur gesicherten Übertragung audiovisueller Ströme nach einem der vorhergehenden Ansprüche, **gekennzeichnet dadurch, dass** die Übertragung der komplementären Information für jeden Kunden und für jede Multicastsitzung mit Hilfe von hybriden oder symmetrischen oder asymmetrischen Verschlüsselungsmethoden gesichert wird

## Claims

1. A method for the secure distribution of digital audiovisual streams according to a standard format, standardized or proprietary toward a plurality of end devices, said stream on which is carried out, prior to transmission to the end device, a splitting of the stream into two parts for generating a modified main stream, having the format of the original stream and complementary information of any format, comprising digital information able to allow the reconstruction of the original stream, wherein separate channels are using to transmit the modified main stream and the complementary information, wherein, during the distribution phase the modified main stream is transmitted from a distribution server, **characterized in that** there is applied a step of transmitting said complementary information, during the distribution phase, in multicast mode group to the plurality of end devices from a secure central server via at least one router and a switch connecting at least said end device to said central server via at least one access point, said transmitting step comprising a segmentation step generating segments of the data of variable size and a step of compressing said additional information and **in that** the management of a multicast group is performed in the connecting layer securing the access to data distribution in multicast mode, only for access point concerned.

2. A method for the secure distribution of audiovisual streams according to Claim 1, **characterized in that** the authentication between the client and the server performs in unicast mode.

3. A method for the secure distribution of audiovisual streams according to Claim 2, **characterized in that** after said authentication, a unique session key is generated by the central server per customer and per content.

4. A method according audiovisual for the secure distribution of claim 3, **characterized in that** the complementary information stream is compressed and encrypted before sending it to the client.

5. A method for the secure distribution of audiovisual streams according to Claim 3, **characterized in that** the transmission of the complementary information is performed to the multicast group and comprises a compression step, an encryption step and a management step of said session key , the end device sending an authentication request to said central server to join the multicast group.

6. A method for the secure distribution of audiovisual streams according to any one of the preceding claims, **characterized in that** the regeneration of a new session key for the client is performed according to the customer's decision to extend the connection, is based on the lifetime of the previous session key, and is individual for each member of the multicast group.

7. A method for the secure distribution of audiovisual streams according to any one of the preceding claims, **characterized in that** the transmission of the complementary information is secured for each client and for each multicast session using hybrid, symmetric or asymmetric encryption methods.
